# EUROPÄISCHE PATENTSCHRIFT

(11) **EP 4 175 857 B1**
(45) Veröffentlichungstag und Bekanntmachung des Hinweises auf die Patenterteilung: **14.08.2024**
(21) Anmeldenummer: 21734804.4
(22) Anmeldetag: 18.06.2021
(51) Int. Cl.: B60S 1/54, B60S 1/48, B60S 1/02

(54) **VORRICHTUNG UND VERFAHREN ZUR REINIGUNG DER INNENSEITE EINER WINDSCHUTZSCHEIBE EINES KRAFTFAHRZEUGES**
DEVICE AND METHOD FOR CLEANING THE INNER FACE OF A WINDSHIELD OF A MOTOR VEHICLE
DISPOSITIF ET PROCÉDÉ DE NETTOYAGE DE LA FACE INTERNE D'UN PARE-BRISE D'UN VÉHICULE À MOTEUR

(30) Priorität: 01.07.2020 DE 102020208210
(43) Veröffentlichungstag der Anmeldung: 10.05.2023
(73) Patentinhaber: Robert Bosch GmbH, 70442 Stuttgart (DE)
(72) Erfinder: JERKEWITZ, Juergen, 66953 Pirmasens (DE)
(86) Internationale Anmeldenummer: PCT/EP2021/066590
(87) Internationale Veröffentlichungsnummer: WO 2022/002638

(56) Entgegenhaltungen:
- EP-A1- 3 575 160
- DE-A1- 102008 027 430
- DE-A1- 102018 008 748
- DE-A1- 3 015 221
- US-A- 2 304 691
- US-A1- 2015 296 108
- US-A1- 2020 139 933

## Beschreibung

Die vorliegende Erfindung betrifft eine Vorrichtung sowie ein Verfahren zur Reinigung der Innenseite einer Windschutzscheibe eines Kraftfahrzeuges, welches mit mehreren über die Innenseite strömend ausgerichteten Luftdüsen eines Innenraumlüftungssystems zur Zuführung einer gefilterten Luftströmung ausgestattet ist.

Das Einsatzgebiet Erfindung erstreckt sich vornehmlich auf die Kraftfahrzeugtechnik. Die in Kraftfahrzeugen eingesetzten Windschutzscheiben stellen in erster Linie den Sichtkontakt des Fahrzeugführers zur Straße und dem hiermit verbundenen Verkehrsgeschehen sicher und verhindern eine Beeinträchtigung dieser Fahrzeugführertätigkeit durch Umwelteinflüsse, wie Fahrtwind, Regen, Schmutz, Insektenflug und dergleichen. Diese Umwelteinflüsse erzeugen allerdings Rückstände auf der Außenseite der Windschutzscheibe, welche gewöhnlich mit einem herkömmlichen automatischen Scheibenwischersystem entfernbar sind. Verschmutzungen auf der Innenseite der Windschutzscheibe können beispielsweise durch Schwebepartikel in der Innenraumluft und dergleichen hervorgerufen werden. Gewöhnlich werden diese Rückstände von Zeit zu Zeit manuell durch Abwischen mit einem Reinigungstuch oder derselben entfernt, was entsprechend unzuverlässig ist und nicht unter allen Umständen zu einem befriedigenden Reinigungsergebnis führt.

### Stand der Technik

Aus der US 8,795,042 B2 geht ein Innenraumlüftungssystem zur Zuführung einer Luftströmung auf die Innenseite der Windschutzscheibe eines Kraftfahrzeuges hervor. Hierfür sind im unteren Randbereich der Windschutzscheibe, benachbart zum Cockpit des Kraftfahrzeuges eine Reihe von Luftdüsen an einem gemeinsamen Verteilergehäuse angeordnet, welche einen Luftstrom über die Innenseite der Windschutzscheibe blasen. Hierfür ist am Verteilergehäuse ein zentraler Gebläseanschluss an die Klimaanlage des Kraftfahrzeuges vorgesehen, welche die Luftströmung hinsichtlich Strömungsgeschwindigkeit und Temperatur in an sich bekannter Weise beeinflusst. Die Luftströmung dient hier vornehmlich zum Entfrosten der Windschutzscheibe. Als Sekundäreffekt können jedoch auch an der Innenseite der Windschutzscheibe lose anhaftende Schmutzpartikel durch die Luftströmung entfernt werden. Die hierdurch erzielte Reinigungswirkung ist jedoch eher unzureichend und vermeidet auf Dauer nicht eine manuelle Innenreinigung der Windschutzscheibe. US 2020/139933 A1 offenbart eine gattungsgemäße Vorrichtung zur Reinigung der Innenseite einer Windschutzscheibe.

Es ist daher die Aufgabe der vorliegenden Erfindung, eine Vorrichtung sowie ein Verfahren zur Reinigung der Innenseite einer Windschutzscheibe eines Kraftfahrzeuges zu schaffen, welche/welches mit einem geringen technischen Aufwand eine hinreichende Reinigungswirkung entfaltet.

### Offenbarung der Erfindung

Die Aufgabe wird ausgehend von einer Vorrichtung gemäß Oberbegriff von Anspruch 1 in Verbindung mit dessen kennzeichnenden Merkmalen gelöst. Verfahrenstechnisch wird die Aufgabe durch Anspruch 6 gelöst. Der nebengeordnete Anspruch 10 gibt ein die erfindungsgemäß Vorrichtung umfassendes Kraftfahrzeug an. Die abhängigen Ansprüche sind auf weitere die Erfindung verbessernde optionale Maßnahmen gerichtet.

Die Erfindung schließt die technische Lehre ein, dass in einem den Luftdüsen eines Innenraumlüftungssystems zugeordneten Leitungsabschnitt eine Einkopplungseinheit zur Beimengung einer von einem Vorratsgefäß bereitgestellten selbsttrocknenden Reinigungsflüssigkeit angeordnet ist, um die Reinigungsflüssigkeit mit der Luftströmung in verdampfter, vernebelter oder versprühter Form auf die Innenseite der Windschutzscheibe zu befördern.

Mit anderen Worten wird ein Innenraumlüftungssystem eines Kraftfahrzeuges also erfindungsgemäß dahingehend modifiziert, dass in die gewöhnlich gefilterte Luftströmung zusätzlich eine Reinigungsflüssigkeit eingebracht wird. Dabei erfolgt die Beimengung mit einer Tröpfchengröße, die einen Transport der Reinigungsflüssigkeit auf die Innenseite der Windschutzscheibe sicherstellt, woran diese sich anreichern kann, um eine Reinigungswirkung zu entfalten. Als verdampfte, vernebelte oder versprühte Form wird in diesem Sinnzusammenhang ein gasförmig bis flüssiger Aggregatzustand der Reinigungsflüssigkeit verstanden, welcher kleinere bis größere Tröpfchen umfasst, die von der Luftströmung transportierbar sind. Die Tröpfchengröße der Reinigungsflüssigkeit ist also durch den Umstand beschränkt, dass die Luftströmung in der Lage sein muss, einen zumindest teilweise Weitertransport in Richtung Windschutzscheibe vorzunehmen.

Auf der Innenseite der Windschutzscheibe löst die sich hieran anreichernde Reinigungsflüssigkeit anhaftenden Schmutz auf und/oder zumindest an. Nach einer kurzen Einwirkzeit wird die Reinigungsflüssigkeit wieder von der Innenseite durch weitere Luftströmung, jedoch ohne zugesetzte Reinigungsflüssigkeit, entfernt. Die Einwirkzeit richtet sich dabei nach der chemischen Zusammensetzung der Reinigungsflüssigkeit und sollte im Bereich zwischen vorzugsweise ein bis zehn Sekunden liegen, um einen hinreichenden Reinigungseffekt zu erzielen und andererseits die Sicht auf das Verkehrsgeschehen während der Reinigung nicht unzulässig lange zu behindern. Der Reinigungseffekt beruht im Prinzip darauf, dass innerhalb der Reinigungsflüssigkeit gelöster Schmutz mit dieser verdunstet und daneben auch von der Reinigungsflüssigkeit angelöster Schmutz durch die Luftströmung mechanisch von der Innenseite der Windschutzscheibe entfernt, also weggeblasen wird.

Gemäß einer die Erfindung weiter verbessernden Maßnahme kann die gefilterte Luftströmung vor Entfernen der Reinigungsflüssigkeit auch zuvor aufgeheizt werden, wozu beispielsweise die Klimafunktion des Innenraumlüftungssystems eines Kraftahrzeuges genutzt werden kann. Es ist jedoch auch denkbar, dass in dem den Luftdüsen zugeordneten Leitungsabschnitt eine zusätzliche Heizeinheit angeordnet ist, beispielsweise benachbart zur Einkopplungseinheit für die Beimengung der Reinigungsflüssigkeit.

Die Einkopplungseinheit zur Beimengung von Reinigungsflüssigkeit bedient sich aus einem nachfüllbaren Vorratsgefäß und kann beispielsweise nach Art einer Saugpumpe ausgebildet sein. Dies bietet den Vorteil, dass zusätzliche elektromechanische Einheiten, wie beispielsweise eine elektrische Pumpe zur Beförderung der Reinigungsflüssigkeit aus dem Vorratsgefäß, entfallen können. Die Saugpumpe arbeitet dabei nach dem allgemein bekannten Venturidüsen-Prinzip.

Je nach Form und Größe der Windschutzscheibe kann es hinreichend sein, wenn die Luftdüsen lediglich im Randbereich von vorzugsweise einer der Langseiten der Windschutzscheibe beabstandet zu einander angeordnet sind, so dass die hiervon ausströmende Luft die Innenseite der Windschutzscheibe möglichst vollständig überstreicht. Alternativ hierzu ist es jedoch möglich, die Luftdüsen umlaufend um die Windschutzscheibe in deren Randbereich anzuordnen, was insbesondere bei großflächigen Windschutzscheiben eine hinreichende Flächenüberdeckung sicherstellt.

### Detailbeschreibung anhand der Zeichnung

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine schematische Darstellung einer Vorrichtung zur Reinigung der Innenseite einer Windschutzscheibe, und
- Fig. 2: einen Ablaufplan eines Verfahrens zur Reinigung mit der Vorrichtung gemäß Fig. 1.

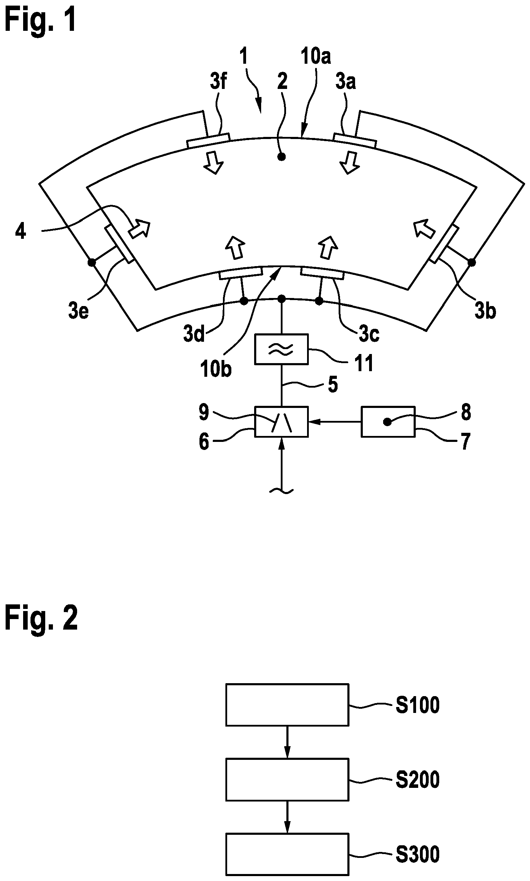

Nach Fig. 1 weist ein - hier nicht weiter dargestelltes - Kraftfahrzeug eine Windschutzscheibe 1 auf, deren Innenseite 2 von Luftdüsen 3a bis 3f in Verlaufsrichtung der Innenseite 2 mit einer Luftströmung 4 (exemplarisch) überströmt wird. Die Luftströmung 4 entstammt dabei einem an sich bekannten Innenraumlüftungssystem des Kraftfahrzeuges, welches in erster Linie als Bestandteil der Klimaanlage für eine hinreichende Innenraumlüftung und - heizung sorgt. Im Bereich der Windschutzscheibe 1 dient dieses Innenraumlüftungssystem im Zusammenhang mit der Klimaanlage auch einem Entfrosten der Windschutzscheibe 1.

Im Hinblick auf die Erfindung ist in einem den Luftdüsen 3a bis 3f zugeordneten Leitungsabschnitt 5 des Innenraumlüftungssystems eine Einkopplungseinheit 6 angeordnet. Die Einkopplungseinheit 6 dient einer Beimengung einer von einem Vorratsgefäß 7 bereitgestellten selbsttrocknenden Reinigungsflüssigkeit 8.

Die Einkopplungseinheit 6 umfasst eine Venturi-Düse 9, welche von der gefilterten, einlassseitig trockenen Luftströmung des Innenraumlüftungssystems durchströmt wird und an einer Querschnittsverengung mit dem Vorratsgefäß 7 verbunden ist. Durch den hohen dynamischen Druck im Bereich der Querschnittsverengung entsteht ein Saugeffekt, welcher zur Beimengung der Reinigungsflüssigkeit 8 zur Luftströmung 4 führt, die um die Reinigungsflüssigkeit 8 angereichert die Entkopplungseinheit 6 verlässt.

Zur Aufbringung der auf diese Weise von der Luftströmung 4 transportierten Reinigungsflüssigkeit 8 sind die Luftdüsen 4a bis 4f bei diesem Ausführungsbeispiel beabstandet zueinander umlaufend um die Windschutzscheibe 1 entlang des Randbereichs angeordnet und sind in Strömungsrichtung entlang der Innenseite 2 der Windschutzscheibe 1 ausgerichtet. Hierdurch wird eine hohe Flächenüberdeckung erzielt.

Zum Abtransport der in der Reinigungsflüssigkeit 8 an- und/oder aufgelösten Schmutzpartikel von der Innenseite 2 der Windschutzscheibe 1 wird gefilterte Luftströmung 4 ohne beigemengte Reinigungsflüssigkeit 8 verwendet und das Abtrocknen kann über eine zusätzliche im Leitungsabschnitt 5 benachbart zur Einkopplungseinheit 6 angeordnete Heizeinheit 11 beschleunigt werden.

Gemäß Fig. 2 wird die vorstehend beschriebene Vorrichtung mit einem Verfahren zur Reinigung der Innenseite 2 der Windschutzscheibe 1 betrieben, nach welchem in einem initialen Schritt S100 zunächst Reinigungsflüssigkeit 8 der gefilterten Luftströmung 4 eines Innenraumlüftungssystems beigemengt wird. Im Folgeschritt S200 wird die über die gefilterte Luftströmung 4 transportierte Reinigungsflüssigkeit 8 auf die Innenseite 2 der Windschutzscheibe 1 aufgebracht und hierauf angereichert. Nach einer Einwirkzeitdauer, welche von der Zusammensetzung der Reinigungsflüssigkeit 8 abhängt, und welche im Bereich von 1 bis 10 Sekunden liegt, wird im Schritt S300 die aufgebrachte Reinigungsflüssigkeit 8 wieder von der Innenseite 2 durch weitere Zuführung des gefilterten Luftstroms, jedoch ohne Reinigungsflüssigkeit, entfernt. Dabei kann die gefilterte Luftströmung 4 aufgeheizt werden.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, dass die Reinigungsflüssigkeit nur von an einer Kante der Windschutzscheibe angeordneten Luftdüsen, vorzugsweise vom unteren Randbereich aus, aufgebracht wird, die mit den Enteisungsdüsen des Innenraumlüftungssystems identisch sind.

## Patentansprüche

1. Vorrichtung zur Reinigung der Innenseite (2) einer Windschutzscheibe (1) eines Kraftfahrzeuges, umfassend mehrere über die Innenseite (2) strömend ausgerichtete Luftdüsen (3a - 3f) eines Innenraumlüftungssystems zur Zuführung einer gefilterten Luftströmung (4),
**dadurch gekennzeichnet, dass** in zumindest einem den Luftdüsen (3a - 3f) zugeordneten Leitungsabschnitt (5) eine Einkopplungseinheit (6) zur Beimengung einer von einem Vorratsgefäß (7) bereitgestellten selbsttrocknende Reinigungsflüssigkeit (8) angeordnet ist, um die Reinigungsflüssigkeit (8) mit der Luftströmung (4) in verdampfter Form auf die Innenseite (2) der Windschutzscheibe (1) zu befördern.

2. Vorrichtung nach Anspruch 1,
**dadurch gekennzeichnet, dass** die Luftdüsen (3a - 3f) im Randbereich einer der Langseiten (10a; 10b) der Windschutzscheibe (1) beanstandet zueinander angeordnet sind.

3. Vorrichtung nach Anspruch 1,
**dadurch gekennzeichnet, dass** die Luftdüsen (3a - 3f) im umlaufenden Randbereich der Windschutzscheibe (1) angeordnet sind.

4. Vorrichtung nach Anspruch 1,
**dadurch gekennzeichnet, dass** die Einkopplungseinheit (6) nach Art einer Saugpumpe ausgebildet ist.

5. Vorrichtung nach Anspruch 1,
**dadurch gekennzeichnet, dass** die gefilterte Luftströmung (4) zum Abtransport und Trocknen der aufgebrachten Reinigungsflüssigkeit (8) über eine im Leitungsabschnitt (5) angeordnete Heizeinheit (11) aufheizbar ist.

6. Verfahren zur Reinigung der Innenseite (2) einer Windschutzscheibe (1) eines Kraftfahrzeuges mit einer Vorrichtung nach einem der vorstehenden Ansprüche, **gekennzeichnet durch** die folgenden Verfahrensschritte:
- Aufbringen einer der gefilterten Luftströmung (4) eines Innenraumlüftungssystems beigemengten Reinigungsflüssigkeit (8) über zumindest einen Teil der Innenseite (2) der Windschutzscheibe (1),
- Entfernen der aufgebrachten Reinigungsflüssigkeit (8) von der Innenseite (2) durch die gefilterte Luftströmung (4) nach Ablauf einer reinigungsmittelspezifischen Einwirkzeitdauer.

7. Verfahren nach Anspruch 6,
**dadurch gekennzeichnet, dass** die gefilterte Luftströmung (4) zum Entfernen der Reinigungsflüssigkeit (8) aufgeheizt wird.

8. Verfahren nach Anspruch 6,
**dadurch gekennzeichnet, dass** die Reinigungsflüssigkeit (8) vor dem oder beim Beimengen zur gefilterten Luftströmung (4) verdampft wird.

9. Verfahren nach Anspruch 6,
**dadurch gekennzeichnet, dass** zur Gewährleistung der Fahrsicherheit für die reinigungsmittelspezifische Einwirkzeitdauer ein Bereich von 1 bis 10 Sekunden gewählt wird.

10. Kraftfahrzeug mit einer Vorrichtung zur Reinigung der Innenseite (2) einer Windschutzscheibe (1) nach einem der Ansprüche 1 bis 5.

## Claims

1. Device for cleaning the inner face (2) of a windscreen (1) of a motor vehicle, comprising a plurality of air nozzles (3a - 3f) of an interior ventilation system for supplying a filtered air flow (4), which air nozzles are oriented so as to produce an air flow over the inner face (2),
**characterized in that** a coupling unit (6) for adding a self-drying cleaning liquid (8), which is supplied by a storage vessel (7), is arranged in at least one line section (5) assigned to the air nozzles (3a - 3f), in order to convey the cleaning liquid (8) with the air flow (4) in vaporized form onto the inner face (2) of the windscreen (1).

2. Device according to Claim 1,
**characterized in that** the air nozzles (3a - 3f) are spaced apart from one another in the edge region of one of the long sides (10a, 10b) of the windscreen (1).

3. Device according to Claim 1,
**characterized in that** the air nozzles (3a - 3f) are arranged in the peripheral edge region of the windscreen (1).

4. Device according to Claim 1,
**characterized in that** the coupling unit (6) is designed in the manner of a suction pump.

5. Device according to Claim 1,
**characterized in that** the filtered air flow (4) is heatable via a heating unit (11), which is located in the line section (5), in order to remove and dry the applied cleaning liquid (8).

6. Method for cleaning the inner face (2) of a windscreen (1) of a motor vehicle with a device according to one of the preceding claims, **characterized by** the following method steps:
- applying a cleaning liquid (8), which is added to the filtered air flow (4) of an interior ventilation system, over at least part of the inner face (2) of the windscreen (1),
- removing the applied cleaning liquid (8) from the inner face (2) by the filtered air flow (4) once a period of action specific to the cleaning agent has expired.

7. Method according to Claim 6,
**characterized in that** the filtered air flow (4) is heated for the removal of the cleaning liquid (8).

8. Method according to Claim 6,
**characterized in that** the cleaning liquid (8) is vaporized before or while being added to the filtered air flow (4).

9. Method according to Claim 6,
**characterized in that** a range of 1 to 10 seconds is selected for the period of action specific to the cleaning agent, in order to ensure driving safety.

10. Motor vehicle with a device for cleaning the inner face (2) of a windscreen (1) according to one of Claims 1 to 5.

## Revendications

1. Dispositif de nettoyage du côté intérieur (2) d'un pare-brise (1) d'un véhicule automobile, comprenant plusieurs buses d'air (3a - 3f) d'un système de ventilation de l'habitacle, orientées de manière à s'écouler sur le côté intérieur (2), pour amener un courant d'air filtré (4),
**caractérisé en ce que** dans au moins une section de conduite (5) associée aux buses d'air (3a - 3f) est agencée une unité d'injection (6) pour ajouter un liquide de nettoyage (8) auto-séchant fourni par un réservoir (7), afin de transporter le liquide de nettoyage (8) sous forme évaporée avec le courant d'air (4) sur le côté intérieur (2) du pare-brise (1).

2. Dispositif selon la revendication 1,
**caractérisé en ce que** les buses d'air (3a - 3f) sont agencées dans la zone de bord de l'un des côtés longs (10a ; 10b) du pare-brise (1) de manière espacée les unes des autres.

3. Dispositif selon la revendication 1,
**caractérisé en ce que** les buses d'air (3a - 3f) sont agencées dans la zone de bord périphérique du pare-brise (1).

4. Dispositif selon la revendication 1,
**caractérisé en ce que** l'unité d'injection (6) est configurée à la manière d'une pompe aspirante.

5. Dispositif selon la revendication 1,
**caractérisé en ce que** le courant d'air filtré (4) peut être chauffé pour évacuer et sécher le liquide de nettoyage appliqué (8) par l'intermédiaire d'une unité de chauffage (11) agencée dans la section de conduite (5).

6. Procédé de nettoyage du côté intérieur (2) d'un pare-brise (1) d'un véhicule automobile avec un dispositif selon l'une quelconque des revendications précédentes, **caractérisé par** les étapes de procédé suivantes :
- l'application d'un liquide de nettoyage (8) ajouté au courant d'air filtré (4) d'un système de ventilation de l'habitacle sur au moins une partie du côté intérieur (2) du pare-brise (1),
- l'élimination du liquide de nettoyage (8) appliqué du côté intérieur (2) par le courant d'air filtré (4) après écoulement d'une durée d'action spécifique au produit de nettoyage.

7. Procédé selon la revendication 6,
**caractérisé en ce que** le courant d'air filtré (4) est chauffé pour éliminer le liquide de nettoyage (8).

8. Procédé selon la revendication 6,
**caractérisé en ce que** le liquide de nettoyage (8) est évaporé avant ou lors de l'ajout au courant d'air filtré (4).

9. Procédé selon la revendication 6,
**caractérisé en ce que**, pour garantir la sécurité de conduite, on choisit une plage de 1 à 10 secondes pour la durée d'action spécifique au produit de nettoyage.

10. Véhicule automobile avec un dispositif de nettoyage du côté intérieur (2) d'un pare-brise (1) selon l'une quelconque des revendications 1 à 5.
